# EUROPEAN PATENT APPLICATION

(11) **EP 4 708 484 A2**
(43) Date of publication of application: **11.03.2026**
(21) Application number: 25193987.2
(22) Date of filing: 05.08.2025
(51) Int. Cl.: H01M 50/152, H01M 50/171, H01M 50/184, H01M 50/186, H01M 50/193, H01M 50/342

(54) **CAP ASSEMBLY WITH INJECTION MOLDED GASKET**

(30) Priority: 28.08.2024 KR 20240116157
(71) Applicant: SAMSUNG SDI CO., LTD., Yongin-si, Gyeonggi-do 17084 (KR)
(72) Inventor: KIM, Dae Kyu, Yongin-si, Gyeonggi-do 17084 (KR)
(74) Representative: Gulde & Partner

(57) **Abstract**

The present disclosure provides a cap assembly (130) that provides improved sealing, a secondary battery including the cap assembly, and a method of manufacturing the secondary battery. The cap assembly (130) includes a upper cap (132), a safety vent (134) below the upper cap (132) and surrounding at least a portion of an edge of the upper cap (132), a lower cap (138) below the safety vent (134), an insulator (136) between the safety vent (134) and the lower cap (138), and an injection molded gasket (139) integral to the safety vent (134) and surrounding at least a portion of an edge of the safety vent (134).

## Description

### BACKGROUND

### FIELD

The present disclosure relates to a cap assembly, e.g. a cap assembly for a secondary battery, and a method of manufacturing the secondary battery.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be manufactured by inserting the electrode assembly into the case and then sealing the case with the cap assembly. In some types of secondary batteries, the cap assembly may be fixed by forming a beading portion and a crimping portion in the case. For example, after the electrode assembly is inserted into the case, an upper end of the case disposed above the electrode assembly may be bent to form the beading portion. After that, a gasket and the cap assembly are seated on the beading portion, and then the crimping portion may be formed by bending the end portion of the case to fix the gasket and cap assembly. But, during the process of forming the crimping portion, the cap assembly may be damaged or the sealing between the gasket and the cap assembly may be weak, causing the electrolyte to leak.

The above information disclosed in this Background section is for enhancement of understanding of the background of the present disclosure, and therefore, it may contain information that does not constitute related (or prior) art.

### SUMMARY

Embodiments of the present disclosure provide a cap assembly. Further, a secondary battery including the cap assembly, and a method of manufacturing the secondary battery are disclosed.

These and other aspects and features of the present disclosure will be described in or will be apparent from the following description of embodiments of the present disclosure.

An embodiment of the present disclosure provides a cap assembly including: an upper cap; a safety vent below the upper cap and surrounding at least a portion of an edge of the upper cap; a lower cap below the safety vent; an insulator disposed between the safety vent and the lower cap, and an injected-molded gasket integral to the safety vent and surrounding at least a portion of an edge of the safety vent. Hence, as the gasket is injection-molded and integral to the safety vent, it is easier to handle and less likely to be incorrectly places when assembling the cap assembly.

The safety vent may include a main body portion, a first portion and/or a second portion. The main body portion may be arranged below the upper cap. The first portion may extend upward from the main body portion. The second portion may extend inward from the first portion. The second portion may be in contact with an upper surface of the upper cap. An advantage of this embodiment may be that the safety vent may hold the upper cap while assembling the cap assembly, thereby facilitating the assembly.

The safety vent may further include a first connecting portion and/or a second connecting portion. The main body portion and the first portion may be connected to the first connecting portion. The first portion and the second portion may be connected to the second connecting portion. An outer surface of each of the first connecting portion and the second connecting portion may be curved. An advantage of this embodiment may be that due to the curvature, the gasket can be injection-molded more easily over the safety vent.

A radius of curvature of the first connecting portion may be between 0.4 mm to 0.8mm and e.g. at least 0.4 mm and/or up to 0.5 mm, up to 0.6 mm, up to 0.7 mm and/or up to 0.8 mm. A radius of curvature of the second connecting portion may be between 0.4 mm to 0.8mm and e.g. at least 0.4 mm and/or up to 0.5 mm, up to 0.6 mm, up to 0.7 mm and/or up to 0.8 mm. An advantage of this embodiment may be that smaller radii require less thick safety vent material, such that weight and volume of the cap assembly is reduced.

A surface of an edge of the main body portion may be etched or notched. A surface of the second bent portion may be etched or notched. An advantage of this embodiment may be that adhesion to the surface and thus sealing is improved.

At least a portion of an edge of the main body portion, e.g. a portion of a surface of an edge of the main body portion, all of a surface of the first portion, and/or least a portion of a surface of the second portion may be nano-coated. An advantage of this embodiment may be that adhesion to the surface and thus sealing is improved.

A thickness of the nano coating may be between 5 µm to 15 µm and e.g. at least 5 µm, and/or up to 6 µm, up to 7 µm, up to 8 µm, up to 9 µm, up to 10 µm, up to 11 µm, up to 12 µm, up to 13 µm, up to 14 µm and/or up to 15 µm. An advantage of this embodiment may be that the nano coating uses a very small volume, only, while still improving surface characteristics for better adhesion and thus sealing.

The gasket may include a first area, a second area and/or a third area. The first area may be in contact with the main body portion of the safety vent. The first area may be spaced apart from the insulator. The first area may be spaced apart from the lower cap at a lower portion of the main body portion. The second area may be in contact with the first portion of the safety vent. The second area may be disposed outside the first portion. The third area may be in contact with the second portion of the safety vent. The third area may be disposed on an upper portion of the second portion. An advantage of this embodiment may be that the gasket not only holds the upper cap and/or the safety vent to facilitate assembly, but that sealing is improved as the length of a sealing stretch or section is increased. Additionally, the gasket may form a sealing labyrinth, further improving the seal.

The gasket may further include an extension portion. The extension portion may extend downward from the first area. The extension portion may be spaced apart from the insulator. The extension portion may be spaced apart from the lower cap. An advantage of this embodiment may be that the extension portion may help positioning the cap assembly when mounting the cap assembly on a can of a secondary battery.

Thicknesses of the first area, the second area, and/or the third area of the gasket may be between 0.1 mm to 0.6 mm and e.g. at least 0.1 mm and/or up to 0.2 mm, up to 0.3 mm, up to 0.4 mm, up to 0.5 mm and/or up to 0.6 mm. An advantage of this embodiment may be that sealing is achieved in a space efficient manner.

A thickness of the third area may be 50% of a thickness of the first area and a thickness of the second area. An advantage of this embodiment may be that dimensional requirements of the cap assembly can be met while still achieving good sealing properties.

A thickness of the first area and a thickness of the third area may be 50% of a thickness of the second area. An advantage of this embodiment may be that dimensional requirements of the cap assembly can be met while still achieving good sealing properties.

The gasket may include one of polybutylene terephthalate (PBT), polypropylene (PP), and perfluoroalkoxy alkane (PFA). An advantage of this embodiment may be that these materials are mechanically, thermally and chemically stable to provide long term sealing.

The safety vent may comprise a notch formed to a predetermined depth on the upper surface. An advantage of this embodiment may be that the safety vent breaks in a defined manner at the notch in case of too high pressure inside of a secondary battery provided with the cap assembly.

The safety vent may comprise aluminum or an aluminum alloy. An advantage of this embodiment may be that the safety vent is light-weight, contributing to an improved energy density per weight of a secondary battery provided with the cap assembly.

That the injection molded gasket is integral to or with the safety vent may mean that the gasket is formed with the safety vent to be handled as one piece or that the gasket and the safety vent are formed as a unit.

Another embodiment of the present disclosure provides a secondary battery including: a cylindrical case having an opening; an electrode assembly accommodated in the case; and a cap assembly coupled to the case to close the opening, wherein the cap assembly includes an upper cap; a safety vent below the upper cap and surrounding at least a portion of an edge of the upper cap; a lower cap below the safety vent; an insulator between the safety vent and the lower cap; and an injection molded gasket integral to the safety vent and surrounding at least a portion of an edge of the safety vent.

Another embodiment of the present disclosure provides a method of manufacturing a secondary battery, the method including: preparing a cylindrical case having an opening; preparing a cap assembly; inserting an electrode assembly into the case; forming a beading portion by bending a side wall portion of the case; seating the cap assembly on the beading portion; and forming a crimping portion by bending an end portion of the side wall portion to thereby seal the opening with the cap assembly, wherein the cap assembly includes a upper cap; a safety vent below the upper cap and bent to surround at least a portion of an edge of the upper cap; a lower cap below the safety vent; an insulator between the safety vent and the lower cap, and a gasket integral to the safety vent and formed by injection molding, with the gasket surrounding at least a portion of an edge of the safety vent.

The preparing of the cap assembly may include sequentially aligning and stacking the upper cap, the safety vent, the insulator, and the lower cap to form the cap assembly; inserting the cap assembly into a gasket molding mold while maintaining a shape of the cap assembly; and injecting a molding material into the mold to injection mold the gasket.

The safety vent may include a main body portion disposed at a lower portion of the upper cap; a first portion that extends upward from the main body portion; and a second bent portion that extends inward from the first portion, with the second portion being in contact with an upper surface of the upper cap.

The gasket may be injection molded to surround at least a portion of a surface of an edge of the main body portion of the safety vent, an entire surface of the first portion, and at least a portion of a surface of the second portion.

The preparing of the cap assembly may include etching or notching a surface of an edge of the main body portion or a surface of the second portion.

The preparing of the cap assembly may include nano-coating at least a portion of a surface of an edge of the main body portion, all of a surface of the first portion, or at least a portion of a surface of the second portion.

According to some embodiments of the present disclosure, a cap assembly effectively seals a case in which an electrode assembly is accommodated, a secondary battery includes the cap assembly, and a method of manufacturing the secondary battery may be provided.

According to some embodiments of the present disclosure, a cap assembly may seal a case to prevent leakage of an electrolyte from a secondary battery, a secondary battery includes the cap assembly, and a method of manufacturing the secondary battery may be provided.

According to some embodiments of the present disclosure, by forming a gasket interposed between a case in which an electrode assembly is accommodated and a cap assembly by insert injection, the thickness of the gasket may be easily set so that the sealing properties and the energy density of the secondary battery may be improved by controlling the thickness of the gasket.

According to some embodiments of the present disclosure, when a secondary battery is manufactured, by sealing a case using a cap assembly integrally formed with a gasket, the manufacturing process of the secondary battery may be simplified, so that the manufacturing time and costs can be reduced.

However, aspects and features of the present disclosure are not limited to those described above, and other aspects and features not mentioned will be clearly understood by a person skilled in the art from the detailed description.

### BRIEF DESCRIPTION OF DRAWINGS

The following schematic drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a longitudinal cross-sectional view of an example of a secondary battery according to an embodiment of the present disclosure.
FIG. 2 illustrates an example of a safety vent and of a gasket of a cap assembly according to an embodiment of the present disclosure in a cross-sectional view.
FIG. 3 illustrates an example of etching or notching a surface of a safety vent according to an embodiment of the present disclosure in a cross-sectional view.
FIG. 4 illustrates an example of nano-coating of a surface of a safety vent according to an embodiment of the present disclosure in a cross-sectional view.
FIG. 5 illustrates a process of insert-molding a gasket into an edge of a safety vent according to an embodiment of the present disclosure in a cross-sectional view.
FIG. 6 illustrates a thickness of each area of a gasket according to an embodiment of the present disclosure in a cross-sectional view.
FIG. 7 illustrates a thickness of each area of a gasket according to an embodiment of the present disclosure in a cross-sectional view.
FIG. 8 illustrates a thickness of each area of a gasket according to an embodiment of the present disclosure in a cross-sectional view.
FIG. 9 illustrates a flowchart of an example of a method for manufacturing a secondary battery according to an embodiment of the present disclosure.
FIG. 10 illustrates a flowchart of an example of an insert-molding method according to an embodiment of the present disclosure.

### DETAILED DESCRIPTION

Hereinafter, exemplary embodiments of the present disclosure will be described, in detail, with reference to the accompanying schematic drawings.

The exemplary embodiments described in this specification and the configurations shown in the drawings are only some of the embodiments of the present disclosure and do not represent all of the technical ideas, aspects, and features of the present disclosure. Accordingly, it should be understood that there may be various modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the sizes and relative sizes of the layers and areas shown in the drawings may be exaggerated for clarity of description. In other words, the sizes shown in the drawings are for convenience of understanding and is not limited thereto. Throughout the specification, the same reference numerals denote the same constituent elements.

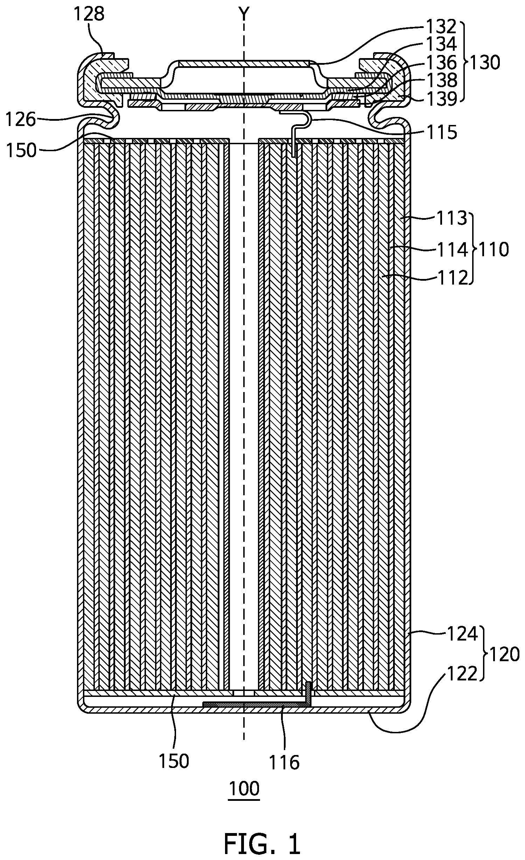

FIG. 1 illustrates a longitudinal cross-sectional view of an example of a secondary battery according to an embodiment of the present disclosure.

As shown in FIG. 1, a secondary battery 100 includes an electrode assembly 110, a case 120 accommodating the electrode assembly 110 and an electrolyte therein, a cap assembly 130 coupled to an opening of the case 120 to seal the case 120, and an insulating plate 150 positioned between the electrode assembly 110 and the cap assembly 130 inside the case 120.

The electrode assembly 110 may include a separator 114, a first electrode 112 and a second electrode 113 disposed with the separator 114 interposed therebetween. The electrode assembly 110 may be wound in a jelly-roll shape with respect to the winding axis Y.

The first electrode 112 includes a first substrate and a first active material layer on the first substrate. A first lead tab 115 may extend outwardly from a first uncoated portion of the first substrate at where the first active material layer is not located, and the first lead tab 115 may be electrically connected to the cap assembly 130.

The second electrode 113 includes a second substrate and a second active material layer on the second substrate. A second lead tab 116 may extend outwardly from a second uncoated portion of the second substrate at where the second active material layer is not located, and the second lead tab 116 may be electrically connected to the case 120. The first lead tab 115 and the second lead tab 116 may extend in opposite directions.

The first electrode 112 may act as a positive electrode. In such an embodiment, the first substrate may be made of, for example, an aluminum foil, and the first active material layer may include, for example, a transition metal oxide. The second electrode 113 may act as a negative electrode. In such an embodiment, the second substrate may be made of, for example, a copper foil or a nickel foil, and the second active material layer may include graphite, for example.

The separator 114 prevents a short circuit between the first electrode 112 and the second electrode 113 while allowing movement of lithium ions therebetween. The separator 114 may be made of, for example, a polyethylene film, a polypropylene film, a polyethylene-polypropylene film, or the like.

The case 120 accommodates the electrode assembly 110 and, together with the cap assembly 130, forms the external appearance of the secondary battery 100. The case 120 may have a substantially cylindrical body portion 124 and a bottom portion 122 connected to one side (e.g., to one end) of the body portion 124. A beading portion (e.g., a bead) 126 deformed inwardly may be formed in the body portion 124, and a crimping part (e.g., a crimp) 128 bent inwardly may be formed at an open end of the body portion 124.

The beading portion 126 can reduce or prevent movement of the electrode assembly 110 inside the case 120 and can facilitate seating of the gasket 139 and the cap assembly 130. The crimping portion 128 may press the edge of the cap assembly 130 to firmly fix the cap assembly 130. The case 120 may be made of, for example, nickel-plated iron. In some embodiments, the case 120 may be made of steel, a steel alloy, aluminum, or an aluminum alloy.

According to the embodiment, the cap assembly 130 may include an upper cap 132, a safety vent 134 disposed below the upper cap 132 and bent to surround at least a portion of the edge of the upper cap 132, a lower cap 138 disposed below the safety vent 134, an insulator 136 disposed between the safety vent 134 and the lower cap 138, and a gasket 139 integrally formed by injection molding to surround at least a portion of the edge of the safety vent 134. The insulator 136 may be inserted between the safety vent 134 and the lower cap 138 to insulate a portion other than the central portion of the safety vent 134 from contacting the lower cap 138. The gasket 139 may insulate the cap assembly 130 from the case 120. The safety vent 134 may have a central portion in contact with the lower cap 138 and a portion that is supported by the insulator 136 that is spaced apart from the lower cap 138. A notch may be formed in the safety vent 134 such that the notch can rupture and thereby allow gas to be discharged from the battery when the internal pressure exceeds a certain pressure.

The insulating plate 150 may be positioned to be in contact with the electrode assembly 110 below the beading portion 126. The insulating plate 150 may have a tab opening through which the first lead tab 115 is drawn out. The cap assembly 130, which is electrically connected to the first electrode 112 by the first lead tab 115, may face the electrode assembly 110 with an insulating plate 150 interposed therebetween and may maintain a state of being insulated (e.g., electrically insulated) from the electrode assembly 110 by the insulating plate 150.

An electrolyte is injected inside the case 120, and it serves to allow lithium ions generated by an electrochemical reaction in the positive and negative plates to move during charging/discharging. The electrolyte may be a non-aqueous organic electrolyte that is a mixture of a lithium salt and a high-purity organic solvent. In some embodiments, the electrolyte may be a polymer formed of a high molecular weight electrolyte or a solid electrolyte. But the type of the electrolyte is not limited to such examples.

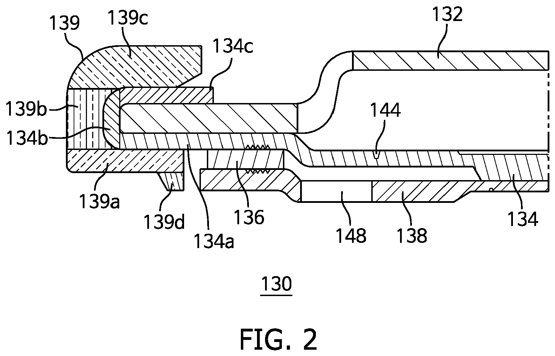

FIG. 2 illustrates an example of an area of a safety vent and an area of a gasket of a cap assembly according to an embodiment of the present disclosure.

Referring to FIG. 2, a cap assembly 130 may include the upper cap 132, the safety vent 134 disposed below the upper cap 132 and bent to surround at least a portion of the edge of the upper cap 132, the lower cap 138 disposed below the safety vent 134, the insulator 136 disposed between the safety vent 134 and the lower cap 138, and the gasket 139 integrally formed by injection molding to surround at least a portion of the edge of the safety vent 134. The cap assembly 130 illustrated in FIG. 2 may correspond to the cap assembly 130 of the secondary battery 100 illustrated in FIG. 1.

The upper cap 132 may be an electrode terminal having a central portion protruding upward to be electrically connected to an external device. In some embodiments, the upper cap 132 may be a positive terminal. A plurality of through-holes (not illustrated) formed in the upper cap 132 may allow internal gas to be discharged to outside of the battery when an abnormal internal pressure occurs in the case 120 due to overcharging or the like. The material of the upper cap 132 can include aluminum or an aluminum alloy, but the present disclosure is not limited thereto.

The safety vent 134 may be disposed below the upper cap 132. The safety vent 134 may be in close contact with, in contact with, coupled to, or connected to the lower portion of the upper cap 132. For example, the safety vent 134 may be in close contact with, in contact with, coupled to, or connected to the edge of the upper cap 132 and not the central portion protruding upward from the upper cap 132. The material of the safety vent 134 may include aluminum or an aluminum alloy, but the present disclosure is not limited thereto.

The safety vent 134 may further include a notch 144 formed to a predetermined depth on the upper surface. The notch 144 may be provided at a position corresponding to the through hole 148 of the lower cap 138. Accordingly, when the internal pressure of the secondary battery is greater than a reference pressure, the notch 144 may rupture due to the gas pressure, and thus the internal gas of the case 120 is discharged to outside of the battery through the through hole of the upper cap 132, thereby making the secondary battery safer.

According to the embodiment, the safety vent 134 may include a main body portion 134a disposed at a lower portion of the upper cap 132, a first bent portion 134b bent upward from the main body portion 134a, and a second bent portion 134c bent inward (or in a center direction of a radius) from an upper portion of the first bent portion 134b and in contact with an upper surface of an edge of the upper cap 132.

According to the embodiment, the main body portion 134a is disposed at the lower portion of the upper cap 132, with a protrusion protruding downward from the center of the upper cap 132 to be in contact with the lower cap 138. In some embodiments, the main body portion 134a may be in contact with the lower surface of the edge of the upper cap 132.

According to the embodiment, the first bent portion 134b may be bent upward from the edge of the main body portion 134a to surround the edge of the upper cap 132. That is, the inner surface of the first bent portion 134b may face and contact the outer surface of the edge of the upper cap 132. In some embodiments, the inner surface of the first bent portion 134b may face the outer surface of the edge of the upper cap 132 and be spaced apart from the outer surface of the edge of the upper cap 132 by a predetermined distance.

The second bent portion 134c may be bent and extended horizontally in the inward direction from the upper portion of the first bent portion 134b to cover at least a portion of the upper surface of the edge of the upper cap 132. The second bent portion 134c may contact the upper surface of the edge of the upper cap 132. That is, the safety vent 134 may be coupled to the upper cap 132 by surrounding the edge of the upper cap 132 by the first bent portion 134b and the second bent portion 134c. Accordingly, sealing at the edge of the cap assembly 130 is improved, which prevents the electrolyte from leaking out of the secondary battery.

The insulator 136 may be disposed between the edge of the safety vent 134 and the edge of the lower cap 138. The insulator 136 may insulate the lower cap 138 from the safety vent 134 when the safety vent 134 is deformed by internal gas. The insulator 136 may be made of a resin material such as polyethylene (PE), polypropylene (PP), or polyethylene terephthalate (PET).

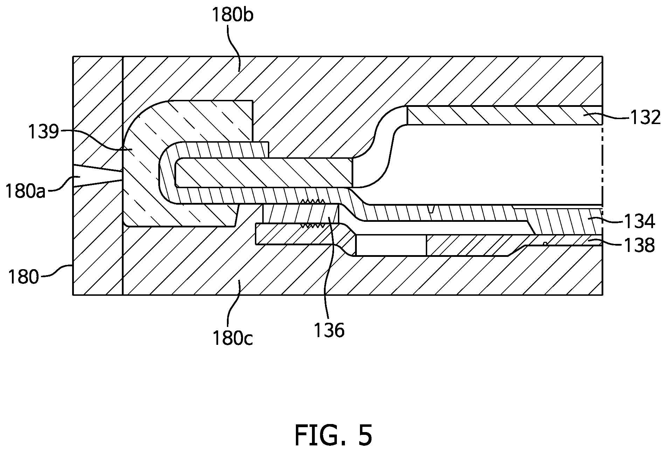

The gasket 139 may be injection molded and thereby integrally formed and connected to at least a portion of the cap assembly 130. For example, the gasket 139 may be integrally formed with the edge of the safety vent 134 of the cap assembly 130. This will be described in detail with reference to FIG. 5.

The gasket 139 may include a first area 139a in contact with the main body portion 134a of the safety vent 134 and spaced apart from the insulator 136 and the lower cap 138 under the main body portion 134a. In some embodiments, the gasket 139 may include a second area 139b in contact with the first bent portion 134b of the safety vent 134 and disposed outside the first bent portion 134b. In some embodiments, the gasket 139 may include a third area 139c in contact with the second bent portion 134c of the safety vent 134 and disposed on the second bent portion 134c.

According to embodiments, the first area 139a is disposed under the main body portion 134a and may contact the lower surface of the edge of the main body portion 134a of the safety vent 134. Further, the first area 139a is spaced apart from the insulator 136 and the lower cap 138 by a predetermined distance.

The second area 139b may extend upward from the edge of the first area 139a to surround the first bent portion 134b of the safety vent 134. The inner surface of the second area 139b may face and contact the outer surface of the first bent portion 134b of the safety vent 134.

According to the embodiment, the third area 139c may extend horizontally in the inward direction from the upper portion of the second area 139b, with the third area 139c covering at least a portion of the upper surface of the second bent portion 134c of the safety vent 134. The third area 139c may extend inward and be in contact with the upper surface of the second bent portion 134c of the safety vent 134. For example, the gasket 139 may be coupled to the safety vent 134 by surrounding the edge of the safety vent 134 with the second area 139b and the third area 139c. Accordingly, after the cap assembly 130 in which the gasket 139 is integrally formed is disposed in the beading portion 126 of the case 120, the case 120 may be sealed even with a small compression force in a process of bending an end portion of the side wall portion of the case 120 (i.e., in a crimping process). Because the compressive force applied to the cap assembly 130 is reduced, deformation of the constituent elements of the cap assembly 130 is reduced, thereby avoiding defects in the secondary battery. In some embodiments, when manufacturing a secondary battery, the case 120 is sealed using the cap assembly 130 integrally formed with the gasket 139, thereby simplifying the secondary battery manufacturing process and reducing manufacturing time and costs.

According to embodiments, the gasket 139 may further include an extension portion 139d extending downward from the first area 139a and spaced apart from the insulator 136 and the lower cap 138. When the case 120 is deformed due to an impact, the extension portion 139d may prevent the case 120 and the lower cap 138 from coming into contact and causing a short circuit.

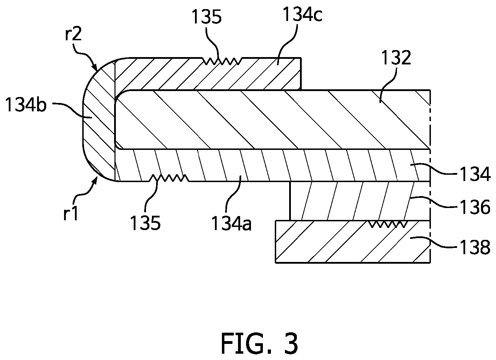

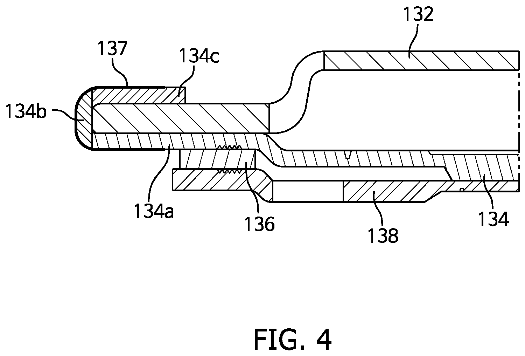

FIG. 3 illustrates an example of etching or notching a surface of a safety vent according to an embodiment of the present disclosure, and FIG. 4 illustrates an example of nano-coating of a surface of a safety vent according to an embodiment of the present disclosure.

Referring to FIG. 3, the safety vent 134 may include a first connecting portion r1 to which the main body portion 134a and the first bent portion 134b are connected, and a second connecting portion r2 to which the first bent portion 134b and the second bent portion 134c are connected. As shown in the illustration, the outer surface of each of the first connecting portion r1 and the second connecting portion r2 may be curved.

According to embodiments, at least one of the radius of curvature of the first connecting portion r1 and the radius of curvature of the second connecting portion r2 of the safety vent 134 may be 0.4 mm to 0.8 mm. With such a configuration, when injection molding the gasket 139 at the edge of the safety vent 134, the connecting portions may be integrally formed without a gap between the gasket 139 and the safety vent 134.

In the safety vent 134, the surface of the edge of the main body portion 134a and the surface of the second bent portion 134c may be etched or notched to form a rough portion 135. Similarly, the surface of the first bent portion 134b may be etched or notched to form a rough portion 135.

More specifically, the surface of the safety vent 134 may be formed with the rough portion 135 using a laser etching process, and the rough portion 135 may be formed using a mold in a notching process. The surface of the safety vent 134 may be formed with a rougher texture by an etching process or a notching process. With such configurations, when injection molding the gasket 139 at the edge of the safety vent 134, the coupling force and sealing properties between the gasket 139 and the safety vent 134 may be improved.

Referring to FIG. 4, at least a portion of the surface of the main body portion 134a, the entire surface of the first bent portion 134b, and/or at least a portion of the surface of the second bent portion 134c may be nano-coated to form a nano-coating layer 137. For example, the nano-coating layer 137 may be formed by nano-coating a portion of the surface of the main body portion 134a and a portion of the surface of the second bent portion 134c. The nano-coating layer 137 may be formed by a method of applying nanoparticles by a chemical vapor deposition method and/or a liquid phase synthesis method.

Table 1 below shows results of measuring the sealing pressure between the gasket 139 and the safety vent 134 in relation to the thickness of the nano-coating layer 137. The sealing pressure was measured three times for each thickness of the nano-coating layer 137, to reduce the amount of error in the data.

**[Table 1]**

| Thickness of Nano-Coating Layer | 0 µm | 5 to 10 µm | 10 to 15 µm |
|---|---|---|---|
| Sealing Pressure 1 (kgf/cm²) | 18 | 25 | 30 |
| Sealing Pressure 2 (kgf/cm²) | 20 | 26 | 30 |
| Sealing Pressure 3 (kgf/cm²) | 21 | 27 | 30 |

The thickness of the nano-coating layer 137 may be set in consideration of a sealing pressure between the gasket 139 and the safety vent 134. For example, in Table 1, as the thickness of the nano-coating layer 137 increases, the sealing pressure increases, and thus the thickness of the nano-coating layer 137 may be set to 5 µm to 15 µm. Accordingly, in a case where the gasket 139 is injection-molded on the upper portion of the nano-coating layer 137 of the safety vent 134, the sealing between the gasket 139 and the safety vent 134 may be improved.

FIG. 5 illustrates a process of insert-molding a gasket onto an edge of a safety vent according to an embodiment of the present disclosure.

Referring to FIG. 5, as described above, a cap assembly 130 may include a upper cap 132, a safety vent 134, an insulator 136, and a lower cap 138. The gasket 139 may be integrally formed with the cap assembly 130 by injection molding. In particular, the gasket 139 may be integrally formed with the edge of the safety vent 134 of the cap assembly 130 by insert injection.

The insert injection molding of the gasket 139 may be performed by inserting the cap assembly 130 into a mold 180, injecting a plastic resin, and cooling/solidifying the injected plastic resin such that the gasket 139 is integrated with the cap assembly 130. The mold 180 may include an injection port 180a, an upper mold 180b, and a lower mold 180c. The injection port 180a may be formed as a through-hole connected to outside of the mold 180 for injecting a plastic resin. The upper mold 180b may form an area in which the upper cap 132 is disposed, and the lower mold 180c may form an area in which the lower cap 138 is disposed. The injection port 180a and a cavity connected to the injection port 180a may be formed by the upper mold 180b and the lower mold 180c, and the shape of the gasket 139 may be determined according to the shape of the cavity.

According to embodiments, the plastic resin for insert injection may be based on a consideration of moldability. Thermoplastics that melt at high temperatures may be suitable for moldability. In particular, the material of the gasket may include one or more of polybutylene terephthalate (PBT), polypropylene (PP), and perfluoroalkoxy alkane (PFA). Polybutylene terephthalate (PBT) is a thermoplastic that exhibits excellent flowability during molding, making it suitable for manufacturing fine parts. After molding, PBT has high durability and strength and high thermal resistance, so it be stable at high temperatures. In some embodiments, PBT has excellent electrical insulation, which may facilitate insulation between the case 120 and the cap assembly 130 when PBT is used as a material for the gasket 139. Polypropylene (PP) is a thermoplastic with excellent processability. After molding, PP has excellent chemical resistance, low moisture absorption, and excellent electrical insulation. Thus, PP may facilitate insulation between the case 120 and the cap assembly 130 in a case of being used as a material for the gasket 139. Perfluoroalkoxy alkane (PFA) is a thermoplastic with excellent processability. After molding, PFA may have excellent chemical, electrical, and mechanical properties.

Because of these characteristics, the gasket 139 formed by insert injection may easily adhere to the edge of the safety vent 134. As a result, during the process of bending the end portion of the side wall portion of the case 120 (for example, in a crimping process), the case 120 may be sealed with a small compressive force. In embodiments, because the gasket 139 is formed by insert injection, it may provide for excellent sealing between the gasket 139 and the edge of the safety vent 134 regardless of the thickness of the edge of the safety vent 134.

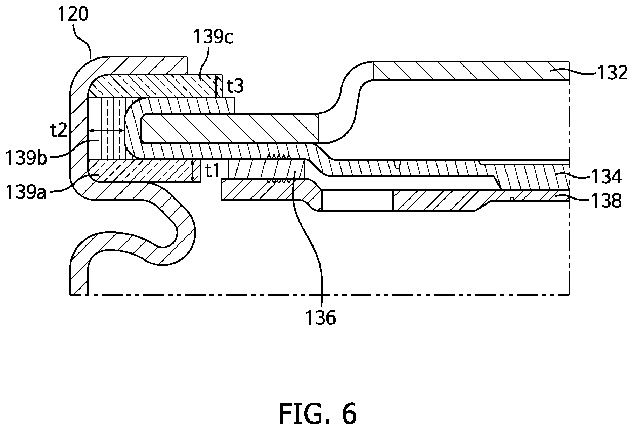

FIG. 6 illustrates a thickness of each area of a gasket according to an embodiment of the present disclosure.

Referring to FIG. 6, the thicknesses t1, t2, and t3 of the first to third areas 139a to 139c of the gasket 139 may be set with consideration of sealing properties of the secondary battery and energy density of the secondary battery. As the thicknesses t1, t2, and t3 of the first to third areas 139a to 139c of the gasket 139 decrease, the energy density of the secondary battery may increase, but the sealing of the secondary battery may also decrease. As the thicknesses t1, t2, and t3 of the first to third areas 139a to 139c of the gasket 139 increase, the energy density of the secondary battery may decrease, but the sealing of the secondary battery may increase.

According to embodiments, the thicknesses t1, t2, and t3 of the first to third areas 139a to 139c of the gasket 139 may be between 0.1 mm to 0.6 mm and e.g. at least 0.1 mm and/or up to 0.2 mm, up to 0.3 mm, up to 0.4 mm, up to 0.5 mm and/or up to 0.6 mm. By setting the thicknesses t1, t2, and t3 of the first to third areas 139a to 139c of the gasket 139 in such a range, there is sufficient sealing to prevent electrolyte leakage in the secondary battery while also improving the energy density of the secondary battery.

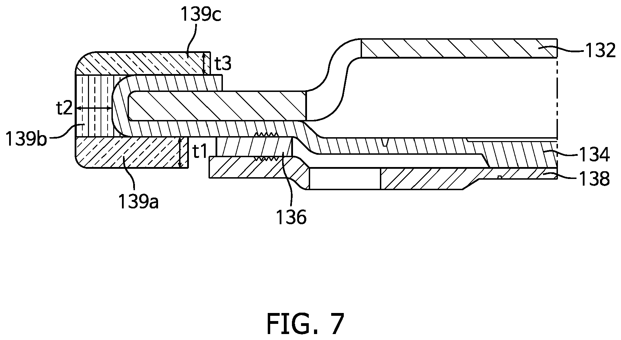

FIG. 7 illustrates a thickness of each area of a gasket according to an embodiment of the present disclosure.

Referring to FIG. 7, the thickness t3 of the third area 139c of the gasket 139 may be less than the thickness t1 of the first area 139a and the thickness t2 of the second area 139b. The thickness t1 of the first area 139a of the gasket 139 and the thickness t2 of the second area 139b may be about the same. In particular, the thickness t3 of the third area 139c of the gasket 139 may be about 50% and e.g. at least 40 % and/or up to 50 % and/or up to 55 % of the thickness t1 of the first area 139a and the thickness t2 of the second area 139b. The embodiment depicted in FIG. 7 may have improved sealing because of the increased thickness t1 of the first area 139a and the thickness t2 of the second area 139b of the gasket 139 as compared to the embodiment of FIG. 6. Thus, the electrolyte may not leak from the case 120. In some embodiments, the thickness t3 of the third area 139c of the gasket 139 is maintained the same as in the embodiment of FIG. 6, thereby maintaining the energy density of the secondary battery 100.

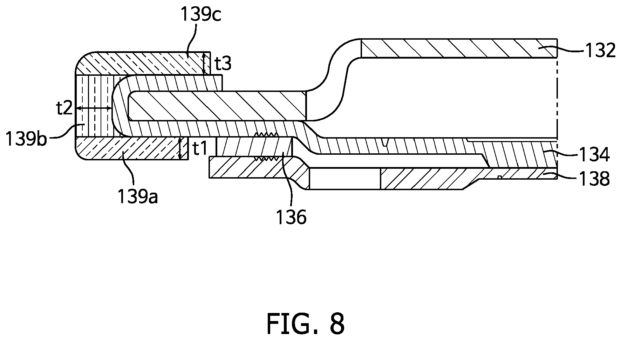

FIG. 8 illustrates a thickness of each area of a gasket according to another embodiment of the present disclosure.

Referring to FIG. 8, the thickness t1 of the first area 139a and the thickness t3 of the third area 139c of the gasket 139 may be less than the thickness t2 of the second area 139b. The thickness t1 of the first area 139a of the gasket 139 and the thickness t3 of the third area 139c may be about the same. In particular, the thickness t1 of the first area 139a and the thickness t3 of the third area 139c of the gasket 139 may be about 50% and e.g. at least 40 % and/or up to 50 % and/or up to 55 % of the thickness t2 of the second area 139b. As compared to the embodiment of FIG. 6, in the embodiment depicted in FIG. 8 only the thickness t2 of the second area 139b of the gasket 139 is increased, so that a secondary battery may be manufactured without changing the outer diameter of the case. As a result, the time and cost of the manufacturing process of the secondary battery may be reduced. As compared to the embodiment of FIG. 6, the thickness t1 of the first area 139a and the thickness t3 of the third area 139c of the gasket 139 are reduced, thereby maintaining the energy density of the secondary battery 100. It should be noted, however, that the present disclosure is not limited with respect to the thickness of each area of the gasket to the embodiments illustrated in FIG. 6 to FIG. 8.

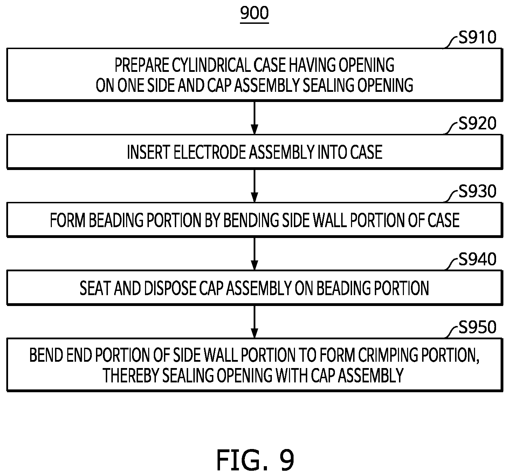

FIG. 9 is a flowchart of a method of manufacturing a secondary battery according to an exemplary embodiment of the present disclosure.

A method 900 of manufacturing a secondary battery may include preparing S910 a cylindrical case having an opening on one side and a cap assembly sealing the opening. Here, as described above, the cap assembly may include a upper cap; a safety vent disposed below the upper cap and bent to surround at least a portion of an edge of the upper cap; a lower cap disposed below the safety vent; an insulator disposed between the safety vent and the lower cap, and a gasket integrally formed by injection molding to surround at least a portion of an edge of the safety vent.

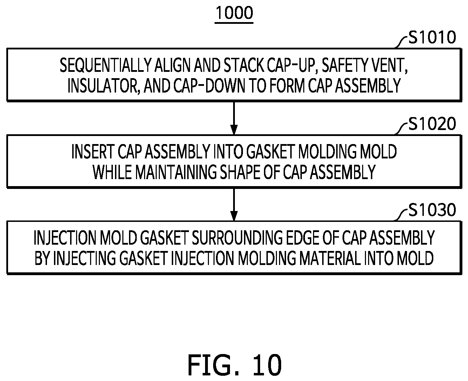

In embodiments, the preparing S910 of the cap assembly sealing the opening may include forming the cap assembly by sequentially aligning and stacking the upper cap, the safety vent, the insulator, and the lower cap; inserting the cap assembly into a gasket mold while maintaining the shape of the cap assembly; and injecting a gasket injection molding material into the mold to injection mold a gasket that surrounds the edge of the cap assembly. This will be described in detail with reference to FIG. 10.

The electrode assembly may be inserted S920 into the case. In some embodiments, a beading portion may be formed S930 by bending the side wall portion of the case. Thereafter, the cap assembly may be seated S940 on the beading portion of the case. Finally, the end portion of the side wall portion of the case may be bent S950 to form a crimping portion, thereby sealing the upper opening with the cap assembly.

As a comparative example of the present disclosure, it may be assumed that an end portion of a side wall portion of a case and a gasket are bent after the gasket is disposed at a beading portion of the case and a cap assembly is disposed on an upper portion of the gasket. In this case, the gasket and the cap assembly may be separately formed. In the comparative example, during the process of bending the end portion of the side wall portion of the case, an increased compressive force may be applied to the cap assembly for additionally bending the gasket. In such a case, the constituent elements of the cap assembly may be deformed during the process of bending the end portion of the side wall portion of the case. As a result, there may be defects in the secondary battery.

According to embodiments, after the cap assembly in which the gasket is integrally formed is disposed on the beading portion of the case, the end portion of the side wall portion of the case may be bent. Because an additional force for bending the gasket is not required, a lower compressive force may be applied to the cap assembly during the process of bending the end portion of the side wall portion of the case. Accordingly, deformation of the constituent elements of the cap assembly may be reduced, thereby reducing defects of the secondary battery. In some embodiments, the secondary battery manufacturing process is simplified using the cap assembly 130 integrally formed with the gasket 139, thereby reducing manufacturing time and costs.

FIG. 10 is a flowchart of an example of an insert-molding method according to an exemplary embodiment of the present disclosure. The insert injection method 1000 may be a sub-step of the preparing S910 of the cap assembly sealing the upper opening of FIG. 9.

The insert injection method 1000 may include sequentially aligning and stacking S1010 a upper cap, a safety vent, an insulator, and a lower cap to form a cap assembly. Here, the safety vent may include a main body portion disposed below the upper cap, a first bent portion bent upward from the main body portion, and a second bent portion bent inward from an upper portion of the first bent portion, with the second bent portion contacting an upper surface of an edge of the upper cap.

Thereafter, the cap assembly may be inserted S1020 into a gasket molding mold while maintaining the shape of the cap assembly. Thereafter, the gasket surrounding the edge of the cap assembly may be injection-molded S1030 by injecting a gasket injection molding material into the mold. The injection-molding of the gasket surrounding the edge of the cap assembly by injecting S1030 the gasket injection molding material into the mold may include injection-molding the gasket to surround at least a portion of the surface of the edge of the main body portion of the safety vent, the entire surface of the first bent portion, and at least a portion of the surface of the second bent portion.

In embodiments, the insert injection molding of the gasket may be performed by inserting the cap assembly into the mold, injecting a plastic resin, and then cooling/solidifying the injected plastic resin such that the gasket is integrated with the cap assembly in the mold. The mold may include an injection port, an upper mold, and a lower mold. The injection port may be formed as a through-hole connected for injecting a plastic resin. The upper mold may form an area in which the upper cap is positioned, and the lower mold may form an area in which the lower cap is positioned. The injection port and a cavity connected to the injection port 180a may be formed by the upper mold and the lower mold 180c, and the shape of the molded gasket may be the shape of the cavity.

As discussed above, the injection molding material for insert injection may be chosen based on moldability, and thermoplastics that melt at high temperatures may be suitable. As examples, the material of the gasket may include one or more of polybutylene terephthalate, polypropylene, and perfluoroalkoxy alkane.

In embodiments, the preparing of the cap assembly sealing the opening may include etching or notching a surface of an edge of the main body portion of the safety vent or a surface of the second bent portion. And in embodiments, the preparing of the cap assembly sealing the opening may include nano-coating at least a portion of a surface of an edge of the main body portion of the safety vent, all of a surface of the first bent portion, or at least a portion of a surface of the second bent portion.

The flowcharts in FIG. 9 and FIG. 10 and the above descriptions are merely examples of the present disclosure, and the scope of the present disclosure is not limited to the flowcharts in FIG. 9 and FIG. 10 and the above descriptions. For example, one or more steps of the flowcharts and the above descriptions may be added, changed, or deleted, the order of one or more steps may be changed, and one or more steps may be simultaneously performed.

Although the present disclosure has been described above with respect to embodiments thereof, the present disclosure is not limited thereto. Various modifications and variations can be made thereto by those skilled in the art within the present disclosure.

## Claims

1. A cap assembly (130) comprising:
an upper cap (132);
a safety vent (134) below the upper cap (132) and surrounding at least a portion of an edge of the upper cap (132);
a lower cap (138) below the safety vent (134);
an insulator (136) between the safety vent (134) and the lower cap (138); and
an injection molded gasket (139) integral to the safety vent (134) and surrounding at least a portion of an edge of the safety vent (134).

2. The cap assembly (130) as claimed in claim 1, wherein the safety vent (134) comprises:
a main body portion (134a) below the upper cap (132);
a first portion (134b) that extends upward from the main body portion (134a); and
a second portion (134c) that extends inward from the first portion (134b), with the second portion (134c) being in contact with an upper surface of the upper cap (132).

3. The cap assembly (130) as claimed in claim 2, wherein the safety vent (134) further comprises:
a first connecting portion (r1) to which the main body portion (134a) and the first portion (134b) are connected, and
a second connecting portion (r2) to which the first portion (134b) and the second portion (134c) are connected, and
wherein an outer surface of each of the first connecting portion (r1) and the second connecting portion (r2) is curved.

4. The cap assembly (130) as claimed in claim 3, wherein at least one of a radius of curvature of the first connecting portion (r1) and a radius of curvature of the second connecting portion (r2) is 0.4 mm to 0.8 mm.

5. The cap assembly (130) as claimed in any of claims 2 to 4, wherein a surface of the main body portion (134a) or a surface of the second bent portion (134c) is etched or notched.

6. The cap assembly (130) as claimed in any of claims 2 to 5, wherein at least a portion of an edge of the main body portion (134a), all of a surface of the first portion (134b), or at least a portion of the second portion (134c) is nano-coated.

7. The cap assembly (130) as claimed in claim 6, wherein a thickness of the nano-coating layer (137) is 5 µm to 15 µm.

8. The cap assembly (130) as claimed in any of claims 2 to 7, wherein the gasket (139) comprises:
a first area (139a) that is in contact with the main body portion (134a) of the safety vent (134) and is spaced apart from the insulator (136) and the lower cap (138) at a lower portion of the main body portion (134a);
a second area (139b) that is in contact with the first portion (134b) of the safety vent (134) and is disposed outside the first portion (134b); and
a third area (139c) that is in contact with the second portion (134c) of the safety vent (134) and is disposed on an upper portion of the second portion (134c).

9. The cap assembly (130) as claimed in claim 8, wherein the gasket (139) further comprises an extension portion (139d) that extends downward from the first area (139a) and is disposed to be spaced apart from the insulator (136) and the lower cap (138).

10. The cap assembly (130) as claimed in claim 8 or 9, wherein thicknesses of the first area (139a), second area (139b), and third area (139c) are 0.1 mm to 0.6 mm.

11. The cap assembly (130) as claimed in any of claims 8 to 10, wherein a thickness of the third area (139c) is 50% of a thickness of the first area (139a) and a thickness of the second area (139b).

12. The cap assembly (130) as claimed in any of claims 8 to 10, wherein a thickness of the first area (139a) and a thickness of the third area (139c) are 50% of a thickness of the second area (139b).

13. The cap assembly (130) as claimed in any of claims 1 to 12, wherein the gasket (139) comprises one of polybutylene terephthalate, PBT, polypropylene, PP, and perfluoroalkoxy alkane, PFA.

14. The cap assembly (130) as claimed in any of claims 1 to 13, wherein the safety vent (134) comprises a notch (144) formed to a predetermined depth on the upper surface.

15. The cap assembly (130) as claimed in any of claims 1 to 14, wherein the safety vent (134) comprises aluminum or an aluminum alloy.
